# EUROPÄISCHE PATENTANMELDUNG

(11) **EP 1 584 757 A2**
(43) Veröffentlichungstag der Anmeldung: **12.10.2005**
(21) Anmeldenummer: 05007265.1
(22) Anmeldetag: 04.04.2005
(51) Int. Cl.: E03B 7/07, G01F 15/08

(54) **Schachteinrichtung und Leitungsanordnung für Fluide**

(30) Priorität: 06.04.2004 DE 102004017310
(71) Anmelder: gwa-armaturen GmbH, 38871 Ilsenburg (DE)
(72) Erfinder: Brand, Siegfried, 38110 Braunschweig (DE)
(74) Vertreter: Einsel, Martin

(57) **Zusammenfassung**

Eine Schachteinrichtung besitzt einen Schachtkörper (2) der von einem Bodenbereich (3) bis zu einem Deckelbereich (4) aufragt und einen Innenraum umgibt. Der Schachtkörper (2) ist zur Anordnung im Erdreich geeignet. Der Schachtkörper (2) ist mit einer abnehmbaren Abdeckung versehen. Er besitzt zwei seitliche erste Anschlüsse (8, 9) für im Erdreich verlegte Versorgungsleitungen (7) für Fluide. Eine Leitungsanordnung (1) weist eine Armatur (30) und Leitungen (10, 11) auf, die die Armatur (30) mit den beiden seitlichen ersten Anschlüssen (8, 9) verbinden. Die Armatur (30) ist zwischen dem Bodenbereich (3) und dem Deckelbereich (4) auf und ab bewegbar. Die Leitungen (10, 11) bestehen aus steifen Leitungsabschnitten (14 bis 19), die über mehrere verdrehbare Kupplungen (20 bis 27) miteinander gekoppelt sind. Bei der Bewegung der Armatur (30) in dem Schachtkörper (2) werden die Leitungsabschnitte (14 bis 19) und die Armatur (30) schräg oder vertikal gestellt.

## Beschreibung

Die Erfindung betrifft eine Schachteinrichtung mit einem Schachtkörper, der von einem Bodenbereich bis zu einem Deckelbereich aufragt, einen Innenraum umgibt und zur Anordnung im Erdreich geeignet ist, mit einer abnehmbaren Abdeckung des Schachtkörpers mit zwei seitlichen ersten Anschlüssen für im Erdreich verlegte Versorgungsleitungen für Fluide, mit einer Leitungsanordnung für Fluide mit einer Armatur und Leitungen wobei die Armatur einen Zähler für das Fluid und/oder Absperreinrichtungen enthält, wobei die Armatur zwischen dem Bodenbereich und dem Deckelbereich auf und ab bewegbar ist, wobei die Leitungen die Armatur mit den beiden seitlichen ersten Anschlüssen für die Versorgungsleitungen verbinden und über zwei zweite Anschlüsse an die Armatur angeschlossen sind, wobei die Leitungen aus miteinander verbundenen steifen Leitungsabschnitten bestehen, die über mehrere verdrehbare Kupplungen miteinander gekoppelt sind. Sie betrifft außerdem eine Leitungsanordnung für Fluide, die in einer solchen Schachteinrichtung eingesetzt werden kann, und schließlich eine dafür verwendbare Kupplungsanordnung.

Leitungen für Fluide, insbesondere Wasserleitungen, müssen vielfach auch in frostgefährdeten Außenbereichen verlegt werden. Dies geschieht dann in einer Bodentiefe, die nicht mehr der Frostgefahr unterliegt, also unterhalb des oberflächennahen Bodenbereiches. Auch diese Leitungen weisen jedoch Abschnitte beispielsweise mit Wasserzählern auf, die in regelmäßigen Abständen abgelesen werden müssen; auch ein Ausbau der Armaturen mit diesen Wasserzählereinrichtungen und ein anschließender Einbau eines geeichten Ersatzgerätes müssen möglich sein.

Da sich die Leitungen aufgrund der Frostgefahr deutlich unterhalb der Erdoberfläche befinden, sind die Armaturen, Zähleranordnungen etc. in Schächten angeordnet, die sich von der Erdoberfläche bis einschließlich zu diesen Anlagen erstrecken. Die Fluidzuführungen führen dann aus dem umgebenden Erdreich in den Bodenbereich der Schachtanlagen, dort zu den entsprechenden Wasserzählern oder sonstigen Armaturen und nach Durchlaufen derselben auf der anderen Seite des Bodenbereichs der Schachtanordnung wieder in das Erdreich zurück.

Um diese Wasserzähleranordnungen etc. ablesen zu können, werden die Schächte im Regelfall begehbar ausgestaltet. Die Schächte müssen also relativ groß sein, um einer mit dem Ablesen der Wasserzähler beauftragten Person das Hinabsteigen, das Ablesen der Wasserzähler und das anschließende Verlassen des Schachtes zu ermöglichen. Eine derartige Anlage wird beispielsweise in der US-PS 1,281,332 beschrieben.

In Regionen ohne eine nennenswerte Gefahr für Bodenfrost kann auf Vorschläge wie in der nachveröffentlichten EP 1 422 353 A1 zurückgegriffen werden, bei der noch per Hand von der Erdoberfläche aus ein Zugriff auf die Ventile zwecks Entnahme möglich ist. Im mitteleuropäischen Raum müssen solche Schachtanlagen jedoch etwa 1 m bis 1,50 m tief sein, damit die fluidführenden Leitungen im Bodenbereich außerhalb des frostgefährdeten oberflächennahen Bereiches des umgebenden Erdbodens verlaufen. Bei Schachtanlagen dieser Tiefe kann es durchaus zu einer Ansammlung von Kohlendioxidschichten oder anderer gefährlicher Gase in Bodennähe in den Schächten kommen, zumal kein Abfließen dieser Gase in die Umgebung möglich ist. Es ist daher nicht ungefährlich, dass Personen in diese Schachtanlagen einsteigen und es werden demzufolge umfangreiche Sicherheitsmaßnahmen getroffen, um ein Retten etwa doch gefährdeter Personen aus diesem Bereich sicher zu stellen.

Darüber hinaus ist das Vorsehen von begehbaren Schachtanlagen recht kostspielig, da entsprechend große, für das Einsteigen, Bewegen und Aussteigen der Benutzer ausreichende Durchmesser vorgesehen werden müssen. Meist verfügen daher diese Schachtanlagen als sogenannte Wasserzählerschächte über tonnenförmige, stabile Gehäuse, die recht kostspielig sind.

In einem Vorschlag entsprechend der JP 10-300550 A wird eine Konzeption vorgeschlagen, bei der sich ein Wasserzähler in einer Konstruktion aus Rohren befindet, die jeweils mittels drehbaren Rohranschlüssen miteinander verbunden sind. Auf diese Weise ist es möglich, in einem relativ breiten Schacht den in einem horizontal verlaufenden Rohr angeordneten Wasserzähler nach oben an die Erdoberfläche zu holen, wobei das horizontale Rohr mit dem Wasserzähler stets horizontal verbleibt und so ein Ablesen auch von oben ermöglicht. Bei dieser Konzeption muss jetzt die Schachtanlage nicht mehr mit Maßnahmen für das Einsteigen, Bewegen und Aussteigen des Benutzers versehen werden, ist aber so breit auszuführen, dass das horizontal verlaufende Rohr mit dem Wasserzähler auch über die gesamte Höhe des Schachtes in dieser Stellung nach oben befördert werden kann.

Um kostengünstige Alternativen zu schaffen ist schon vorgeschlagen worden, statt mit starren Leitungen mit beweglichen Schläuchen zu operieren. Am Eintrittsbereich der Fluidzuleitung wird ein Schlauch angeschlossen, der seinerseits mit dem Wasserzähler oder der sonstigen Armatur verbunden ist. Am Ausgang des Wasserzählers oder der sonstigen Armatur schließt sich ein weiterer Schlauch an, der dann bis zu einem Anschlussstutzen der Fluidausgangsleitung führt. Im Regelfall liegt die Schlauchleitung mehr oder weniger geordnet in der Nähe des Bodenbereiches des Schachtes und wird von dem Fluid durchströmt, das den Wasserzähler entsprechend beaufschlagt. Die fluidführende Schlauchleitung muss natürlich in Bodennähe zusammengerollt oder in anderer Form aufbewahrt werden, um während der Frostrisikozeiten sich außerhalb des frostgefährdeten oberflächennahen Bereiches zu befinden.

Als Beispiel hierfür schlägt die WO 87/04203 A1 einen mit Armaturen ausgerüsteten Schacht für Wasser- beziehungsweise Dampfleitungen vor, in dem Wasseruhren angebracht sein sollen. Diese Wasseruhren oder sonstigen Armaturen sind mit einem in den Schacht hereinführenden und einem aus dem Schacht herausführenden Element verbunden. Diese beiden Elemente sind spiralig aufgerollt und bestehen aus einem flexiblen Schlauch oder elastischen Rohr. Die Armaturen können so mittels eines Henkels bis in Bodennähe angehoben werden.

Zum Ablesen wird dann in geeigneter Form mittels Anhebehaken oder dergleichen der Wasserzähler ergriffen und durch den Schacht nach oben an die Erdoberfläche gefördert, damit der Wasserzähler dort abgelesen und gegebenenfalls ausgetauscht werden kann. Da die Schlauchleitungen flexibel sind, ermöglichen sie ein solches Heraufziehen durch den Schacht nach oben.

Allerdings hat sich eine solche Schlauchkonzeption als nicht unproblematisch herausgestellt. Schläuche sind zwar flexibel und biegbar, aber nur sehr begrenzt um ihre Längsachse drehbar, wenn sie keinen Schaden nehmen sollen. Beim Heraufziehen und beim Absenken der Armaturen werden diese Schläuche oder flexiblen Rohre Torsionsspannungen ausgesetzt, die relativ rasch zu defekten und Belastungen führen können.

Zu bedenken ist dabei auch, dass zum Herausnehmen eine relativ starre, längliche Konfiguration bewegt und heraufgefördert werden muss. Diese Konfiguration enthält den Zähler und die Armaturen auf beiden Seiten des Zählers. Die Baulängen dieser drei Elemente addieren sich. Alle drei müssen turnusmäßig für den vorgeschriebenen Wechsel der Absperr- und Sicherungsarmaturen (Rückflussverhinderer), also der sogenannten Wasserzähleranlage, die beispielsweise in der DIN 1988 beschrieben ist, heraufgeholt werden. Dieses starre, längliche Element führt zu Torsionsbelastungen bei den daran angeschlossenen Schlauchwindungen.

Die DE 297 12 050 U1 schlägt zur Lösung dieses Problems eine Schlauchkupplung mit einem Kugelkopf vor. Das löst allerdings nicht alle Probleme, zumal die Schläuche ja mehrfach im Laufe ihrer Betriebsdauer heraufgeholt und wieder heruntergelassen werden müssen und dabei in Bodennähe ohne Eingriffsmöglichkeit des Benutzers eine ungeknickte und stabile Position einnehmen sollen.

Darüber hinaus kommt es bei Schläuchen materialbedingt über die Jahre zu Ermüdungserscheinungen, zumal die Schläuche ja den Temperaturschwankungen oberhalb des Gefrierpunktes in der äußeren Umgebung praktisch in vollem Maße ausgesetzt sind und darüber hinaus von innen durch das hindurchströmende Fluid auch mit Druck beaufschlagt werden. Eine Wartung ist praktisch nicht möglich, da es sich ja gerade um nicht begehbare Schächte handelt.

Es ist daher Aufgabe der vorliegenden Erfindung, eine andere Möglichkeit für eine Anordnung von Wasserzählern und vergleichbaren Armaturen im Außenbereich vorzuschlagen, bei der weder begehbare Schächte noch Schläuche eingesetzt werden müssen.

Diese Aufgabe wird bei einer gattungsgemäßen Schachteinrichtung dadurch gelöst, dass die verdrehbaren Kupplungen so aufgebaut sind, dass bei der Armatur aufwärts und abwärts sich die Leitungsanordnung mit den Leitungsabschnitten und der Armatur so entfaltet, dass die Armatur und die Leitungsabschnitte vertikal oder in Schräglage verlaufen.

Hierfür wird eine Leitungsanordnung mit den entsprechend für diese Leitungsanordnung vorstehend genannten Merkmalen eingesetzt.

Dabei hat es sich als besonders geeignet herausgestellt, eine Kupplungsanordnung zu verwenden, die Kupplungsanordnung mit zwei gegeneinander verdrehbaren Kupplungsteilen, deren Achse im Wesentlichen senkrecht zur Achse der Ausgänge angeordnet ist, dass die Kupplung eine auf den äußeren Umfang eines ersten Leitungsabschnittes aufbringbare, über die Stirnseite des ersten Leitungsabschnittes hinausragende erste Hülse aufweist, dass der zweite Leitungsabschnitt an seiner Außenseite von der ersten Hülse umfasst wird, dass zwischen der Innenseite der ersten Hülse und der Außenseite des zweiten Leitungsabschnitts eine Dichtung vorgesehen ist, und dass die Stirnseite der ersten Hülse in Richtung auf die Achse der Hülse umgebogen oder umbiegbar ist und in eine Nute an der Außenseite des zweiten Leitungsabschnittes eingreifend ausgebildet ist.

Weiterbildungen der Erfindung und Bauteile für die Durchführung der Erfindung sind in den abhängigen Ansprüchen gekennzeichnet.

Im Prinzip besteht die Erfindung darin, dass bei einer Leitungsanordnung für Fluide, insbesondere zur Verwendung in einem Wasserzählerschacht, der im Bodenbereich zwei erste Anschlüsse für im Erdreich verlegte Leitungen und eine mit den ersten Anschlüssen über zweite Anschlüsse verbindbare, Wasserzähler und/oder Absperreinrichtungen enthaltende, zwischen dem Bodenbereich und einem Deckelbereich auf- und ab- bewegbare Armatur aufweist, zwischen den ersten Anschlüssen und den zweiten Anschlüssen jeweils mehrere, durch je eine verdrehbare Kupplung miteinander verbindbare, steife Leitungsabschnitte vorgesehen sind. Die Länge der Leitungsabschnitte und der ihnen zugeordneten Kupplungen ist kleiner als die lichte Weite des Wasserzählerschachtes in der Ebene der ersten Anschlüsse. Die Kupplungen enthalten zwei gegeneinander verdrehbar ausgebildete Kupplungsteile, deren Achse im Wesentlichen senkrecht zur Achse der gekuppelten Leitungsabschnitte angeordnet ist.

Die Leitungsabschnitte sind bevorzugt parallel so zur Achse des Wasserzählers beziehungsweise der Armatur angeordnet, dass bei einem Hochziehen und/oder Absenken die gesamte Armaturenanlage aus der ursprünglichen horizontalen Lage in eine vertikale Lage verschwenkt wird. Dadurch kann die relativ lange Armatur mit beispielsweise dem Wasserzähler auch die vorgesehene Verjüngung in dem Schacht beziehungsweise in dem Behälter passieren.

Hier liegt ein entscheidender Unterschied zur JP 10-300550 A, wo genau das ausgeschlossen werden soll, was dort zu einer wesentlich breiteren Schachtanlage führt.

Durch die Anordnung der Achsen der Leitungsabschnitte einerseits und der Eingangsanschlüsse und Ausgangsanschlüsse horizontal andererseits kann also die gesamte Höhe des Schachtes oder auch Länge des Behälters als Leitungslänge herangezogen werden. Somit ist ein sehr großer Gesamthub möglich.

Anders als beim Stand der Technik nach der JP 10-300550 A ist ein Verklemmen der Anlage vermieden.

Für die Verbindung der ersten und zweiten Anschlüsse sind vorzugsweise je drei Leitungsabschnitte und vier gegeneinander verdrehbare Kupplungen vorgesehen. Die beiden zweiten Anschlüsse der Armatur sind über je eine verdrehbare Kupplung mit dem ihnen jeweils zugewandten Leitungsabschnitt verbunden. Diese Kupplungen enthalten zwei gegeneinander verdrehbar ausgebildete Kupplungsteile, deren Achse im Wesentlichen senkrecht zur Achse der gekuppelten Leitungsabschnitte und der Armatur angeordnet ist. Dadurch können die Leitungsabschnitte und die Armatur um die drehbaren Kupplungen im Bodenbereich zusammengefaltet werden. Zur Bedienung der Armatur ist diese nur hochzuziehen, wobei sich die einzelnen Leitungsabschnitte um die verdrehbaren Kupplungen entfalten.

Die Länge der Armatur und der zugehörigen Kupplung ist vorzugsweise größer bemessen als die lichte Weite des Schachtes im Deckelbereich. Das ist möglich, weil die Leitungsabschnitte und die Armatur bei der Faltung oder Entfaltung in Schräglage um Grenzbereiche herumgeführt werden. Dadurch kann der Wasserzählerschacht oberhalb des Bodenbereiches eine geringere lichte Weite haben als dieser und als die Länge der Leitungsabschnitte.

Die Länge der Kupplungen quer zur Achsrichtung der Leitungsabschnitte sind größer bemessen als der Abstand zweier benachbarter Leitungsabschnitte in parallel gedrehter Position. Dadurch können die Leitungsabschnitte zu einem flacheren Bündel im Bodenbereich gefaltet werden, als es den addierten Querschnittswerten entspricht. Die Faltung ist nicht dem Zufall überlassen wie bei Schläuchen, sondern ergibt sich aus der stabilen Konstruktion der Armatur und der Leitungsabschnitte und der Kupplungen und der vorbestimmten Lage hinsichtlich der Anschlüsse.

Der Wasserzählerschacht ist oberhalb des Bodenbereichs teleskopartig ausgebildet und kann somit aus einer mit der Erdoberfläche abschließenden Deckelposition in eine Arbeitsposition verlängert oder herausgezogen werden, in der er zugleich die Bedienung der Armatur erleichtert und die entfalteten oberen Leitungsabschnitte schützt. Die Länge des teleskopartig verlängerbaren Teiles des Wasserzählerschachtes ist zu diesem Zweck größer bemessen als die Länge eines Leitungsabschnitts.

Auf dem äußeren Umfang eines ersten Kupplungsteiles ist vorzugsweise eine über die Stirnseite des ersten Kupplungsteiles hinausragende erste Hülse vorgesehen. Das zweite Kupplungsteil ist an seiner Außenseite von der ersten Hülse umfasst, zwischen der Innenseite der ersten Hülse und der Außenseite des zweiten Kupplungsteiles ist eine Dichtung vorgesehen, die für eine Abdichtung der Kupplung nach außen sorgt. Die Stirnseite der ersten Hülse ist in Richtung auf die Achse der Hülse umgebogen oder umbiegbar und hinter eine Wandung an der Außenseite des zweiten Kupplungsteiles eingreifend ausgebildet. Dadurch werden die beiden Kupplungsteile drehbar ausgebildet und zugleich dicht zusammengehalten. Die Außenseite des zweiten Kupplungsteiles mit der Lagerung der Dichtung und der Wandung ist als zweite Hülse ausgebildet und auf dem entsprechenden Kupplungsteil aufgeschrumpft oder aufgedreht.

Zur näheren Erläuterung der Erfindung wird im Folgenden ein Ausführungsbeispiel der Erfindung anhand der Zeichnungen beispielsweise beschrieben. Diese zeigen in:
- **Figur 1**: einen Schacht in Vorderansicht mit Leitungsanordnung für Fluide,
- **Figur 2**: den Wasserzählerschacht gemäß Figur 1 in Seitenansicht,
- **Figur 3**: die Faltung der Leitungsabschnitte und der Armatur in Schräglage,
- **Figur 4**: den Wasserzählerschacht in perspektivischer, geschnittener Ansicht,
- **Figur 5**: eine Draufsicht auf die gefalteten Leitungsabschnitte,
- **Figur 6**: eine Seitenansicht des zusammengefalteten Leitungsstapels in Figur 5,
- **Figur 7**: eine Ausführungsform einer verdrehbaren und doch dichten Kupplung.

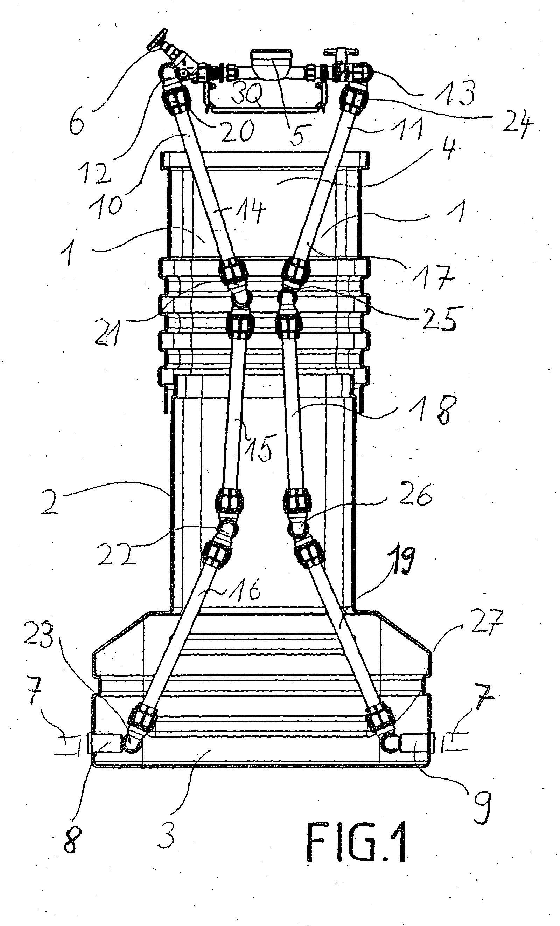

In **Figur 1** ist eine Schachteinrichtung mit einer Leitungsanordnung 1 für Fluide dargestellt, die im Wesentlichen in einem Schachtkörper, bevorzugt einem Wasserzählerschacht 2 mit einem Bodenbereich 3 und einem Deckelbereich 4 vorgesehen ist. Wasserzählerschächte 2 sind üblicherweise im Erdreich versenkt angeordnet, um dort Wasserzähler 5 und Absperreinrichtungen 6 oder dergleichen mit den aus Frostgründen tief im Erdreich angeordneten Versorgungsleitungen 7 verbinden zu können.

Im Bodenbereich des Wasserzählerschachtes 2 sind daher zwei erste Anschlüsse 8, 9 für die im Erdreich verlegten Versorgungsleitungen 7 angeordnet. Jeder erste Anschluss 8, 9 ist durch Leitungen 10, 11 mit zweiten Anschlüssen 12, 13 verbunden, die zusammen mit dem Wasserzähler 5 und/oder den Absperreinrichtungen 6 zwischen dem Bodenbereich 3 und dem Deckelbereich 4 auf- und ab-bewegbar sind.

Zwischen den ersten Anschlüssen 8, 9 und den zweiten Anschlüssen 12, 13 sind die beiden Leitungszüge 10, 11 in Form jeweils mehrerer steifer Leitungsabschnitte 14, 15, 16, 17, 18, 19 vorgesehen sind, die durch je eine Kupplung 20, 21, 22, 23, 24, 25, 26, 27 miteinander und mit den ersten und zweiten Anschlüssen verbunden sind. Die Kupplungen enthalten jeweils zwei gegeneinander verdrehbare Teile. Dadurch können die steifen Leitungsabschnitte 14-19 zusammen mit dem Wasserzähler 5 und den Absperreinrichtungen 6 zu einem Leitungsstapel geringer Bauhöhe im Bodenbereich des Schachtes 2 zusammengefaltet werden. die Länge der Leitungsabschnitte 14-19 und der ihnen zugeordneten Kupplungen 20-27 ist kleiner als die lichte Weite des Wasserzählerschachtes 2 in der Ebene der ersten Anschlüsse 8, 9.

Die Kupplungen 20-27 enthalten jeweils zwei gegeneinander verdrehbar ausgebildete Kupplungsteile 28, 29 enthalten, deren Achse im Wesentlichen senkrecht zur Achse der gekuppelten Leitungsabschnitte angeordnet ist, in Figur 1 also senkrecht zur Bildebene. Auf diese Weise können die zur Inspektion und Bedienung im oder oberhalb des Deckelbereiches 4 in einem Rahmen 30 gehaltenen oder zusammengefassten Bauteile 5, 6, 8, 9, 10, 11 durch Faltung der Leitungsabschnitte 14-19 in den Bodenbereich 3 abgesenkt werden.

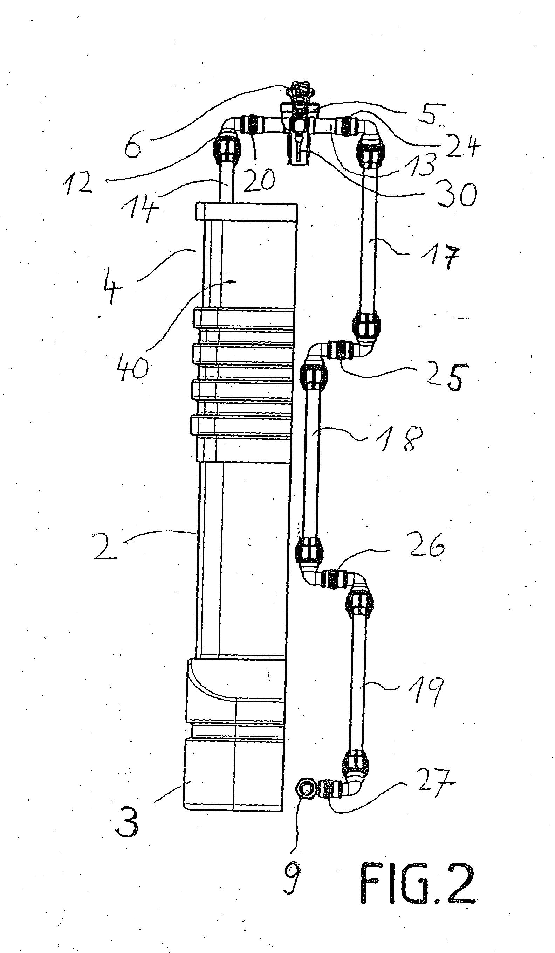

**Figur 2** zeigt den Wasserzählerschacht 2 gemäß Figur 1 in Seitenansicht, wobei nur der eine Leitungszug 11 zur Gänze sichtbar ist. Wie in Figur 1 sind drei Leitungsabschnitte 14, 15, 16 durch vier Kupplungen 20, 21, 22, 23 miteinander und mit den ersten und zweiten Anschlüssen 8, 12 verbunden. In der Seitenansicht ist erkennbar, dass die vier gegeneinander verdrehbaren Kupplungen 20-23 gegeneinander verdrehbare Kupplungsteile 28, 29 enthalten, deren Achse im Wesentlichen senkrecht zur Achse der gekuppelten Leitungsabschnitte 14, 15, 16 und der Anschlüsse 8, 12 angeordnet ist. Die Faltung der Leitungsabschnitte 14-19 geschieht in Figur 2 um die waagerecht in der Zeichenebene dargestellten Achsen der Kupplungen.

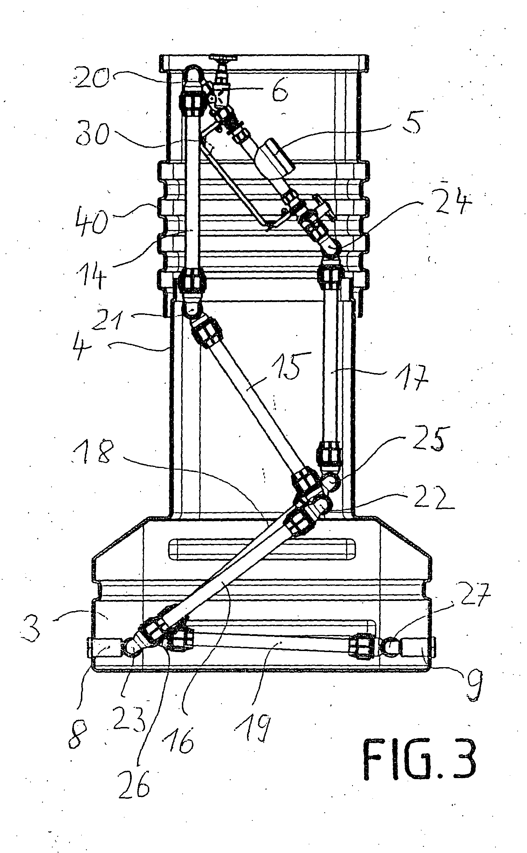

Die Länge der Armatur 30 und der zugehörigen Kupplungen ist gemäß Figur 1 größer als die lichte Weite des Schachtes 2 im Deckelbereich 4. Dennoch kann die gesamte Armatur 30 mit ihren Bauteilen 5, 6, 12, 13 und ihren Kupplungen 20-27 in den Schacht 2 mit seiner kleineren lichten Weite bis zum Bodenbereich 3 abgesenkt werden. **Figur 3** zeigt, wie bei der Faltung der Leitungsabschnitte 12-17 und der Armatur 30 die Schräglage der Leitungsabschnitte und der Armatur genutzt wird, alle Bauteile durch den engen Schacht in den weiten Bodenbereich zu bewegen. Auf diese Weise wird ein tiefer weiter Bodenbereich geschaffen, der zur Aufnahme aller Leitungsteile bemessen ist und als Zugang nur einen engen Schachtteil mit geringer Kältezufuhr aufweist.

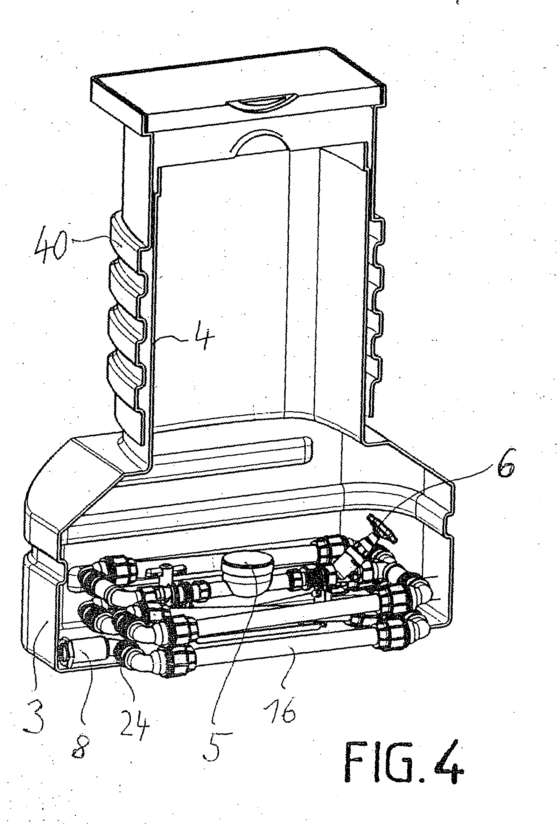

**Figur 4** zeigt den Wasserzählerschacht 2 in perspektivischer, geschnittener Ansicht. Im weiten Bodenbereich 3 ist die zusammengefaltete Leitungsanordnung erkennbar. Oberhalb des Bodenbereiches 3 hat der Schacht 2 eine geringere lichte Weite als die Länge der Leitungsabschnitte.

Der Wasserzählerschacht 2 ist oberhalb des Bodenbereichs 3 zum Deckelbereich 4 hin teleskopartig verlängerbar. Die Länge des teleskopartig verlängerbaren Teiles 40 des Wasserzählerschachtes 2 ist größer ist als die Länge eines Leitungsabschnitts 14-19. Auf diese Weise kann der Schacht 2 zu Inspektionszwecken aus dem Erdreich bis zu einer gewünschten Arbeitshöhe angehoben werden. Er kann dabei zugleich die ebenfalls angehobenen Leitungen schützen. Sollte der Schacht 2 im Verkehrszugänglichen Bereich liegen, kann dieser anhebbare Schachtteil in Warnfarben bemalt sein.

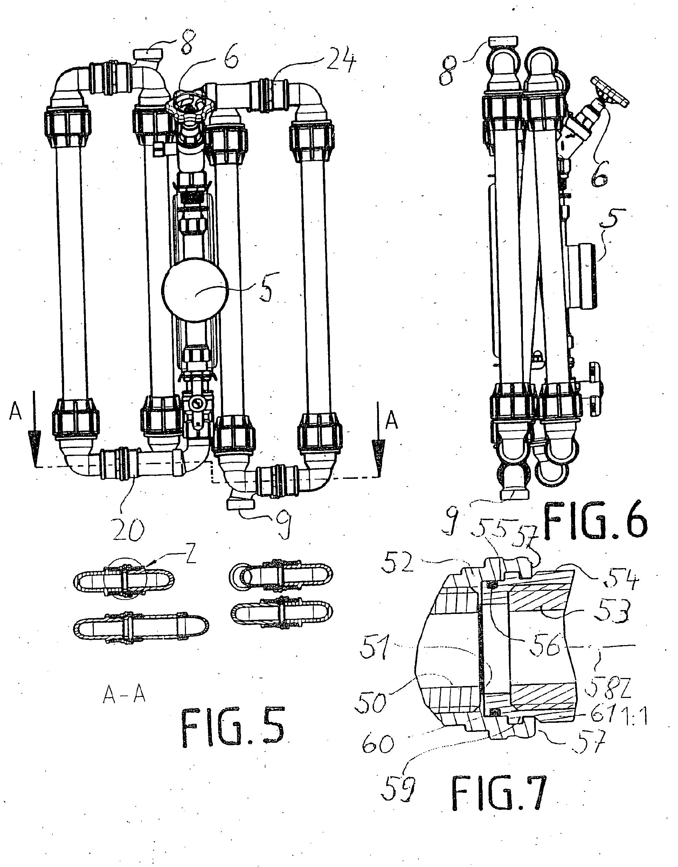

**Figur 5** zeigt, dass die Länge der Kupplungen quer zur Achsrichtung der Leitungsabschnitte größer ist als der Abstand zweier benachbarter Leitungsabschnitte in parallel gedrehter Position. Dadurch wird erreicht, dass die Höhe des zusammengefalteten Leitungsstapels kleiner ist, als die Addition der Leitungsdurchmesser. Eine Seitenansicht des zusammengefalteten Leitungsstapels ist in **Figur 6** gezeigt.

**Figur 7** zeigt eine Ausführung einer verdrehbaren und doch dichten Kupplung. Auf dem äußeren Umfang eines ersten Kupplungsteiles 50 ist eine über die Stirnseite 51 des ersten Kupplungsteiles 50 hinausragende erste Hülse 52 vorgesehen. Das zweite Kupplungsteil 53 wird an seiner Außenseite 54 von der ersten Hülse 52 umfasst. Zwischen der Innenseite 55 der ersten Hülse 52 und der Außenseite 54 des zweiten Kupplungsteiles 53 ist eine Dichtung 56 vorgesehen. Die Stirnseite 57 der ersten Hülse 52 ist in Richtung auf die Achse 58 der Hülse 52 umgebogen oder umbiegbar und ist hinter einer Wandung 59 an der Außenseite 54 des zweiten Kupplungsteiles 53 eingreifend ausgebildet.

Die Außenseite 54 des zweiten Kupplungsteiles 53 zusammen mit der Lagerung 60 der Dichtung 56 und der Wandung 59, hinter die die Hülse 52 eingreift, kann als zweite Hülse 61 ausgebildet sein.

In einer bevorzugten, dargestellten Ausführungsform der Erfindung besitzt eine Schachteinrichtung also einen zweiteiligen, geschlossenen Schachtkörper 2. Der Schachtkörper 2 ist in seiner Bauhöhe verstellbar und kann dadurch an verschiedene Einbautiefen von Versorgungsleitungen für Fluide angepasst werden, insbesondere also die Zufuhrleitungen für Wasser beispielsweise für Haushalte, ebenso aber auch für Abwasserleitungen, andere, insbesondere gewerbliche Fluidleitungen und der Gleichen. Die Schachteinrichtung ist damit also für verschiedene Tiefen problemlos anpassbar, in denen diese Versorgungsleitungen laufen, und schließt trotzdem jeweils bündig mit der Erdoberfläche ab.

Der Schachtkörper 2 ist oben mit einem abnehmbaren Deckel verschlossen, damit der Innenraum des Schachtkörpers zugänglich bleibt. In der Wandung des Schachtes sind seitlich sowohl ein Anschluss für die Zuleitung einer Versorgungsleitung als auch ein Anschluss für eine Weiterführende oder abgehende Versorgungsleitung vorgesehen.

Der Schachtköper 2 ist unten so ausgebildet, dass er das insgesamt höhenverstellbare Leitungspaket 10, 11 aufnimmt. In diesen Leitungen befindet sich auch eine Armatur 30 mit einem Wasserzähler 5 und Absperrmechanismen 6 am Eingang und am Ausgang. Auch andere Sonderbauteile können hier vorgesehen werden.

Von dem Bodenbereich 3 aus nach oben wird der Schachtkörper sehr schmal. Dadurch kann das insgesamt nicht gewünschte Einsteigen und Aussteigen von Menschen sicher verhindert werden, sodass auch Unfälle ausgeschlossen werden können. Durch den sehr schmalen Aufbau wird nur relativ wenig Raum umbaut, sodass auch vergleichsweise wenig Material abtransportiert werden muss und die Beeinträchtigung des Volumens um den Schachtkörper herum so gering wie möglich bleibt.

Das Leitungspaket mit den Leitungen 10, 11 und der Armatur 30 ist insgesamt teleskopartig auseinanderziehbar und kann auch genauso wieder zusammengefaltet werden. Dadurch wird es möglich, die gesamte Leitungsanordnung durch den oberen, schmalen Teil des Schachtkörpers 2 zu transportieren, in dem die Leitungsabschnitte und die Armatur vertikal oder schräg gestellt sind und so durch diesen schmaleren Teil passen.

Über dem Schacht kommt die Armatur 30 mit der Wasserzähleranlage waagerecht zu liegen. Dadurch kann dort sowohl der Zähler abgelesen als auch der Einbau und Ausbau des Zählers sehr leicht vollzogen werden.

Nach dem Ablesen beziehungsweise etwaigen Reparaturen oder Austauschmaßnahmen kann die gesamte Armatur 30 mit der Wasserzähleranlage zusammen mit dem Leitungspaket, also der Leitungsanordnung mit den Leitungen 10 und 11 wieder in den Bodenbereich 3 im Schachtkörper 2 abgesenkt werden.

Der Schachtkörper 2 kann zusätzlich durch einen Innendeckel gegen das Eintreten von Schwallwasser geschützt werden. Es ist auch möglich, einen besonderen Innendeckel zu verwenden, der den gesamten Hohlraum beziehungsweise innenraum auch gegen Druckwasser abdichtet.

Die Leitungsabschnitte 14 bis 19 sind parallel so zur Armatur 30 mit dem Wasserzähler 5 und zu deren Achse angeordnet, dass bei einem Hochziehen oder Absenken der Armatur 30 diese Armatur 30 aus der horizontalen Lage in eine vertikale Lage schwenkt und dadurch die Verjüngung in den Behälter beziehungsweise dem Schachtkörper 2 passieren kann. Durch die Anordnung der Leitungsachsen der Leitungsabschnitte 14 bis 19 einerseits und der horizontalen Anschlüsse 8 und 9 andererseits kann also die gesamte Behälterlänge beziehungsweise Höhe des Schachtkörpers 2 als Leitungslänge herangezogen werden. Damit ist ein sehr großer Gesamthub möglich.

Trotzdem ist ein Verklemmen der Anlage anders als beim Stand der Technik vollständig ausgeschlossen.

### Bezugszeichenliste

- 1: Leitungsanordnung
- 2: Wasserzählerschacht
- 3: Bodenbereich
- 4: Deckelbereich
- 5: Wasserzähler
- 6: Absperreinrichtung
- 7: Versorgungsleitung
- 8: Erster Anschluss
- 9: Erster Anschluss Stirnseite von 42

- 10: Leitung zwischen 8 und 12
- 11: Leitung zwischen 9 und 13
- 12: Zweiter Anschluss
- 13: Zweiter Anschluss
- 14: Leitungsabschnitt
- 15: Leitungsabschnitt
- 16: Leitungsabschnitt
- 17: Leitungsabschnitt
- 18: Leitungsabschnitt
- 19: Leitungsabschnitt

- 20: Kupplung
- 21: Kupplung
- 22: Kupplung
- 23: Kupplung
- 24: Kupplung
- 25: Kupplung
- 26: Kupplung
- 27: Kupplung
- 28: Kupplungsteile
- 29: Kupplungsteile

- 30: Armatur

- 40: Teleskop am Schacht 3

- 50: erstes Kupplungsteil
- 51: Stirnseite von 50
- 52: erste Hülse
- 53: zweites Kupplungsteil
- 54: Außenseite von 53
- 55: Innenseite von 52
- 56: Dichtung
- 57: Stirnseite von 52
- 58: Achse
- 59: Wandung von 53

- 60: Lagerung von 56
- 61: zweite Hülse

## Patentansprüche

1. Schachteinrichtung
mit einem Schachtkörper (2), der von einem Bodenbereich (3) bis zu einem Deckelbereich (4) aufragt, einen Innenraum umgibt und zur Anordnung im Erdreich geeignet ist,
mit einer abnehmbaren Abdeckung des Schachtkörpers (2),
mit zwei seitlichen ersten Anschlüssen (8, 9) für im Erdreich verlegte Versorgungsleitungen (7) für Fluide,
mit einer Leitungsanordnung (1) für Fluide mit einer Armatur (30) und Leitungen (10, 11),
wobei die Armatur (30) einen Zähler (5) für das Fluid und / oder Absperreinrichtungen (6) enthält,
wobei die Armatur (30) zwischen dem Bodenbereich (3) und dem Deckelbereich (4) auf und ab bewegbar ist,
wobei die Leitungen (10, 11) die Armatur (30) mit den beiden seitlichen ersten Anschlüssen (8, 9) für die Versorgungsleitungen (7) verbinden und über zwei zweite Anschlüsse (12, 13) an die Armatur (30) angeschlossen sind,
wobei die Leitungen (10, 11) aus miteinander verbundenen steifen Leitungsabschnitten (14 bis 19) bestehen, die über mehrere verdrehbare Kupplungen (20 bis 27) miteinander gekoppelt sind,
**dadurch gekennzeichnet,**
**dass** die verdrehbaren Kupplungen (20 bis 27) so aufgebaut sind, dass bei der Bewegung der Armatur (30) aufwärts und abwärts sich die Leitungsanordnung (1) mit den Leitungsabschnitten (14 bis 19) und der Armatur (30) so entfaltet, dass die Armatur (30) und die Leitungsabschnitte (14 bis 19) vertikal oder in Schräglage verlaufen.

2. Schachteinrichtung nach Anspruch 1,
**dadurch gekennzeichnet,**
**dass** der Schachtkörper (2) oberhalb des Bodenbereiches (3) eine geringere lichte Weite hat als im Bodenbereich (3).

3. Schachteinrichtung nach Anspruch 1 oder 2,
**dadurch gekennzeichnet,**
**dass** der Schachtkörper (2) oberhalb des Bodenbereiches (3) eine geringere lichte Weite hat als die Länge der Leitungsabschnitte (14 bis 19).

4. Schachteinrichtung nach einem der vorstehenden Ansprüche,
**dadurch gekennzeichnet,**
**dass** die Kupplungen (20 bis 27) und die Leitungsabschnitte (14 bis 19) so aufgebaut sind, dass bei voll entfalteter Leitungsanordnung (1) die Armatur (30) an ihrem obersten erreichbaren Punkt horizontal angeordnet ist.

5. Schachteinrichtung nach einem der vorstehenden Ansprüche,
**dadurch gekennzeichnet,**
**dass** die Kupplungen (20 bis 27) jeweils zwei gegeneinander verdrehbar ausgebildete Kupplungsteile (28, 29) aufweisen, deren Drehachse (58) im Wesentlichen senkrecht zur Achse der gekuppelten Leitungsabschnitte (14 bis 19) angeordnet ist.

6. Schachteinrichtung nach einem der vorstehenden Ansprüche,
**dadurch gekennzeichnet,**
**dass** die beiden Leitungen (10, 11) jeweils drei Leitungsabschnitte (14, 15, 16, 17, 18, 19) und jeweils vier gegeneinander verdrehbare Kupplungen (20 bis 23; 24 bis 27) aufweisen.

7. Schachteinrichtung nach einem der vorstehenden Ansprüche,
**dadurch gekennzeichnet,**
**dass** die beiden Leitungen (10, 11) auch über jeweils eine verdrehbare Kupplung (20, 23, 24, 27) mit den ersten Anschlüssen (8, 9) und den zweiten Anschlüssen (12, 13) verbunden sind.

8. Schachtanordnung nach einem der vorstehenden Ansprüche,
**dadurch gekennzeichnet,**
**dass** die Leitungsabschnitte (14 bis 19) und die Armatur (30) um die drehbaren Kupplungen (20 bis 27) zum Bodenbereich (3) hin zusammenfaltbar sind.

9. Schachtanordnung nach einem der vorstehenden Ansprüche,
**dadurch gekennzeichnet,**
**dass** die Länge der Kupplungen (20 bis 27) quer zur Achsrichtung der Leitungsabschnitte (14 bis 19) größer bemessen ist als der Abstand zweiter benachbarter Leitungsabschnitte in parallel gedrehter Position.

10. Schachteinrichtung nach einem der vorstehenden Ansprüche,
**dadurch gekennzeichnet,**
**dass** der Schachtkörper (2) oberhalb des Bodenbereiches (3) teleskopartig ausgebildet ist.

11. Schachteinrichtung nach einem der vorstehenden Ansprüche,
**dadurch gekennzeichnet,**
**dass** der Armatur (30) eine Handhabe zugeordnet ist, und dass beim Anheben der Armatur (30) diese zusammen mit den Leitungsabschnitten (14 bis 19) um die verdrehbaren Kupplungen (20 bis 27) entfaltet wird.

12. Schachteinrichtung nach einem der vorstehenden Ansprüche,
**dadurch gekennzeichnet,**
**dass** auf dem äußeren Umfang eines ersten Kupplungsteils (50) eine über die Stirnseite (51) des ersten Kupplungsteiles (50) hinausragende erste Hülse (52) vorgesehen ist,
**dass** das zweite Kupplungsteil (53) an seiner Außenseite (54) von der ersten Hülse (52) umfasst ist,
**dass** zwischen der Innenseite (55) der ersten Hülse (52) und der Außenseite (54) des zweiten Kupplungsteiles (53) eine Dichtung (56) vorgesehen ist, die für eine Abdichtung der Kupplung nach außen sorgt.

13. Schachteinrichtung nach Anspruch 12,
**dadurch gekennzeichnet,**
**dass** die Stirnseite (57) der ersten Hülse (52) in Richtung auf die Achse (58) der Hülse (52) umgebogen oder umbiegbar ist und hinter eine Wandung (59) an der Außenseite (54) des zweiten Kupplungsteiles (53) eingreifend ausgebildet ist.

14. Schachteinrichtung nach Anspruch 12 oder 13,
**dadurch gekennzeichnet,**
**dass** die Außenseite (54) des zweiten Kupplungsteils (53) mit der Lagerung (60) der Dichtung (56) und der Wandung (59) als zweite Hülse (61) ausgebildet und auf dem entsprechenden Kupplungsteil aufgeschrumpft oder aufgedreht ist.

15. Leitungsanordnung (1) zur Verwendung in einer Schachteinrichtung nach einem der vorstehenden Ansprüche.

16. Kupplungsanordnung mit zwei gegeneinander verdrehbaren Kupplungsteilen, deren Achse im Wesentlichen senkrecht zur Achse der Ausgänge angeordnet ist, dass die Kupplung eine auf den äußeren Umfang eines ersten Leitungsabschnittes aufbringbare, über die Stirnseite des ersten Leitungsabschnittes hinausragende erste Hülse aufweist, dass der zweite Leitungsabschnitt an seiner Außenseite von der ersten Hülse umfasst wird, dass zwischen der Innenseite der ersten Hülse und der Außenseite des zweiten Leitungsabschnitts eine Dichtung vorgesehen ist, und dass die Stirnseite der ersten Hülse in Richtung auf die Achse der Hülse umgebogen oder umbiegbar ist und in eine Nute an der Außenseite des zweiten Leitungsabschnittes eingreifend ausgebildet ist.

17. Kupplungsanordnung nach Anspruch 16,
**dadurch gekennzeichnet,**
**dass** die Außenseite (54) des zweiten Kupplungsteiles (53) mit der Lagerung (60) der Dichtung (56) und der Wandung (59) als zweite Hülse (61) ausgebildet und auf dem entsprechenden Kupplungsteil aufgeschrumpft oder aufgedreht ist.
